# EUROPEAN PATENT APPLICATION

(11) **EP 4 521 524 A1**
(43) Date of publication of application: **12.03.2025**
(21) Application number: 24198788.2
(22) Date of filing: 06.09.2024
(51) Int. Cl.: H01M 50/209, H01M 50/249, H01M 50/289, H01M 50/507, H01M 50/291, H01M 50/383

(54) **BATTERY PACK**

(30) Priority: 07.09.2023 KR 20230119187
(71) Applicant: SAMSUNG SDI CO., LTD., Yongin-si, Gyeonggi-do 17084 (KR)
(72) Inventor: Lee, Hyeok, 17084 Yongin-si, Gyeonggi-do (KR)
(74) Representative: Gulde & Partner

(57) **Abstract**

A battery pack may include two or more battery cells arranged in a first direction each having a terminal portion including a first terminal and a second terminal. A side frame accommodates the battery cells. Two or more frame portions are on and coupled to an upper portion of the battery cells and an upper portion of the side frame. Each of the frame portions include an insertion portion extending in a width direction. Two or more busbars are coupled to the frame portions and electrically connect the battery cells to each other. An insulation sheet is accommodated in the insertion portion in each of the frame portions.

## Description

### BACKGROUND

### (a) Field

The present disclosure relates to a battery pack.

### (b) Description of the Related Art

Secondary batteries are utilized as the main power source for electric vehicles, hybrid electric vehicles, and plug-in hybrid electric vehicles, which have been proposed as an alternative to solve various problems such as air pollution of conventional gasoline or diesel vehicles.

However, due to the need for high-output, large-capacity batteries in electric vehicles, and the like, battery modules in which multiple battery cells are stacked and then electrically connected in series and parallel are used.

A battery module includes a plurality of battery cells stacked, and terminals exposed at both ends of each battery cell are electrically connected to provide high voltage.

In a conventional battery module, an insulation sheet (mica sheet) is installed to prevent heat propagation when malfunction of a battery cell occurs.

The insulation sheet is fixed to the vent portion of the battery cell of the battery pack by an adhesive member or the insulation sheet is inserted into the inside of the holder busbar.

However, when the insulation sheet is installed by using an adhesive member, there is a problem in that stable fixation is not achieved in the event of an abnormal explosion of the battery cell.

Additionally, when the insulation sheet is installed on the holder busbar, the installation structure is complicated, resulting in an inefficient structure.

The above-described information disclosed in the technology that serves as the background of the present disclosure is only for improving understanding of the background of the present disclosure and thus may include information that does not constitute the related art.

### SUMMARY

The present disclosure relates to various embodiments of a battery pack that does not require a holder for electrical connection of a plurality of battery cells, has a streamlined configuration, and does not deform due to the welding heat.

A battery pack includes two or more battery cells arranged in a first direction. Each of the battery cells includes a terminal portion including a first terminal and a second terminal. The battery pack also includes a side frame accommodating the battery cells; two or more frame portions on and coupled to an upper portion of the battery cells and an upper portion of the side frame. Each of the frame portions includes an insertion portion extending in a width direction. The battery pack also includes two or more busbars coupled to the frame portions and electrically connecting the battery cells together; and an insulation sheet in the insertion portion in each of the frame portions.

Each of the frame portions may include an upper frame on an upper portion of one of the battery cells and on an upper portion of the terminal portion of one of the battery cells and a reinforcing portion in the upper frame. The insulation sheet is accommodated in the upper frame.

The upper frame may include a first frame; a second frame coupled to a lower surface on a first side of the first frame; and a third frame coupled to a lower surface on a second side of the first frame.
The insertion portion is below the first frame and is defined by an interval by which the second frame and the third frame are spaced apart from each other.

The battery pack may include a first through hole in the first frame exposing a vent portion in one the battery cells.

The reinforcing portion may include a reinforcing frame in an interior of the first frame around a peripheral edge of the first through hole and a support protrusion protruding from an edge of the reinforcing frame to support a surface of the insulation sheet.

An end portion of the support protrusion may be bent to a first side, and a bent portion of the support protrusion may be in surface contact with a surface of the insulation sheet.

The battery pack may include a first insertion protrusion of the second frame and a second insertion protrusion of the third frame, and the first insertion protrusion and the second insertion protrusion may be between the battery cells.

The second frame and the third frame may be fixed to the first frame by heat staking.

The battery pack may include a second through hole in the second frame and a third through hole in the third frame, and the second through hole and the third through hole may expose the terminal portion.

The battery pack may include a first stepped portion in an upper surface of the second frame and a second stepped portion in an upper surface of the third frame.

One of the busbars may be coupled to the first stepped portion on the upper surface of the second frame and electrically connected to the terminal portion.

One of the busbars may be coupled to an edge of the second through hole and electrically connected to the terminal portion of an adjacent one of the battery cells.

Another one of the busbars may be coupled to the second stepped portion in the upper surface of the third frame.

One of the busbars may be coupled to an edge of the third through hole and electrically connected to the terminal portion of another adjacent one of the battery cells.

One of the busbars may be coupled to the first stepped portion by heat staking and another one of the busbars may be coupled to the second stepped portion by heat staking.

The battery pack may include an inlet groove on a surface of the upper frame between the second through hole and the third through hole.

The inlet groove may include a first groove extending along a first side edge of the first frame and a second groove extending along a second side edge of the first frame, and the first through hole may be between the first groove and the second groove.

The insulation sheet may have a plate shape extending in the first direction and passing through the insertion portion in each of the frame portions.

The insulation sheet may include a mica material.

The insulation sheet may be configured to cover the vent portion in each of the battery cells.

According to an embodiment, electrical connection of the busbar to a plurality of battery cells in upper portions of battery cells may be achieved without using a conventional busbar holder for installation of a busbar. Therefore, a structural change, such as bending a portion of a side frame in order to connect the conventional holder, is not required, and improvement of the installed configuration and reduction of manufacturing cost may be achieved.

According to an embodiment, since the busbar may be fixed to the top of the battery cells without using the conventional busbar holder, the installation height of the battery pack may be lowered, and installation of the battery pack may be optimized.

According to an embodiment, since it is possible to fix the frame portion, to which the busbar is fixed, to the top of the battery cells in an unwelded state, deformation due to welding heat may be prevented and durability of the installation may be improved.

### BRIEF DESCRIPTION OF THE DRAWINGS

FIG. 1 is a perspective view schematically showing a battery pack an embodiment.
FIG. 2 is an exploded perspective view schematically showing a separated state of a frame portion to which the busbar of FIG. 1 is connected.
FIG. 3 is an exploded perspective view schematically showing a separated state of the frame portion of FIG. 2 on top of battery cells.
FIG. 4 is a top plan view schematically showing a fixed state of a busbar to a plurality of frame portions according to an embodiment.
FIG. 5 is a perspective view schematically showing a frame portion an embodiment.
FIG. 6 is a top plan view schematically showing the frame portion of FIG. 5.
FIG. 7 is a side view schematically showing the frame portion of FIG. 5.
FIG. 8 is a side view schematically showing a state in which a reinforcing portion is inserted into a frame portion an embodiment.

### DETAILED DESCRIPTION OF THE EMBODIMENTS

Hereinafter, the present disclosure will be described more fully with reference to the accompanying drawings, in which embodiments of the disclosure are shown. As those skilled in the art would realize, the described embodiments may be modified in various different ways, all without departing from the spirit or scope of the present disclosure. The drawings and description are to be regarded as illustrative in nature and not restrictive. Like reference numerals designate like elements throughout the specification.

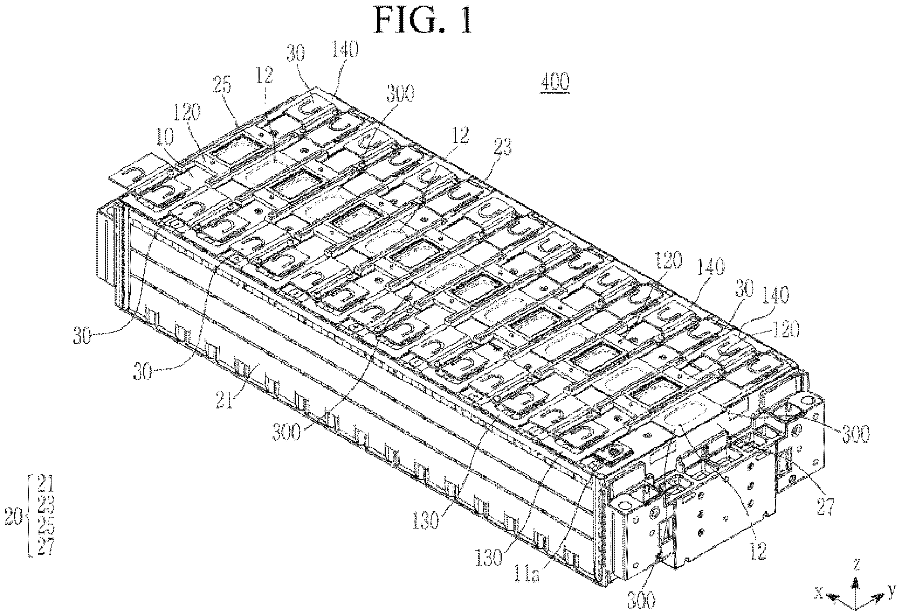

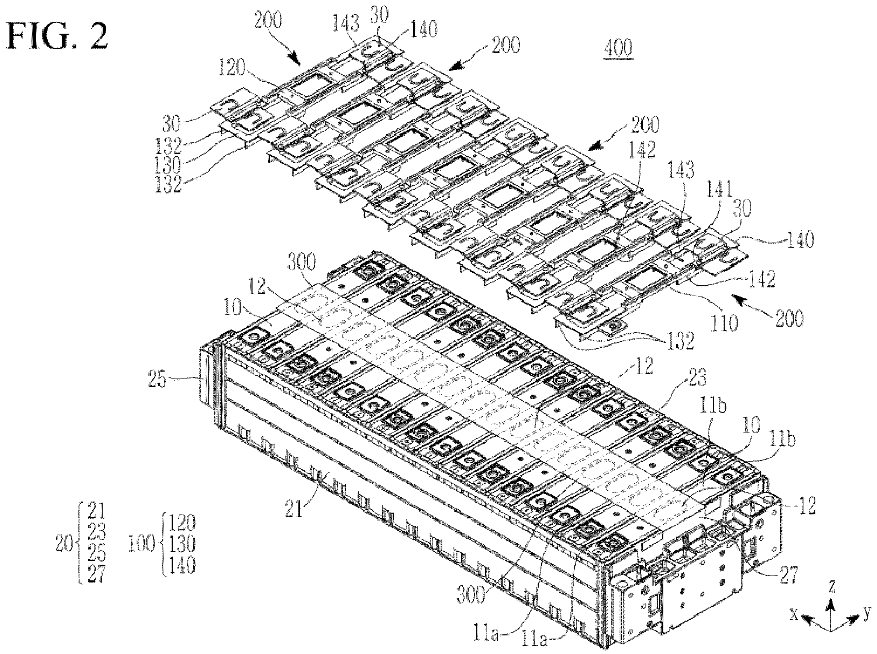

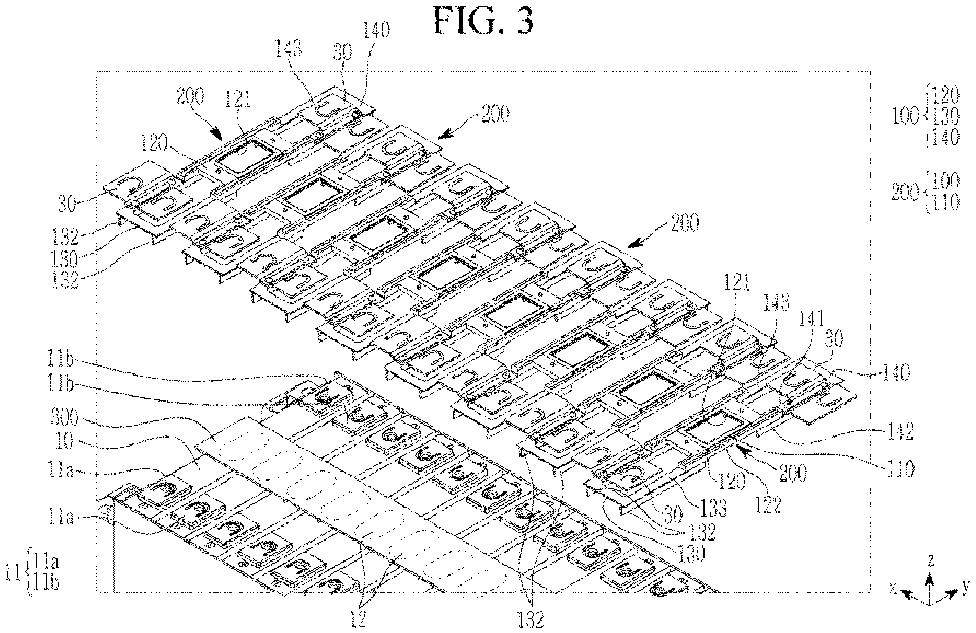

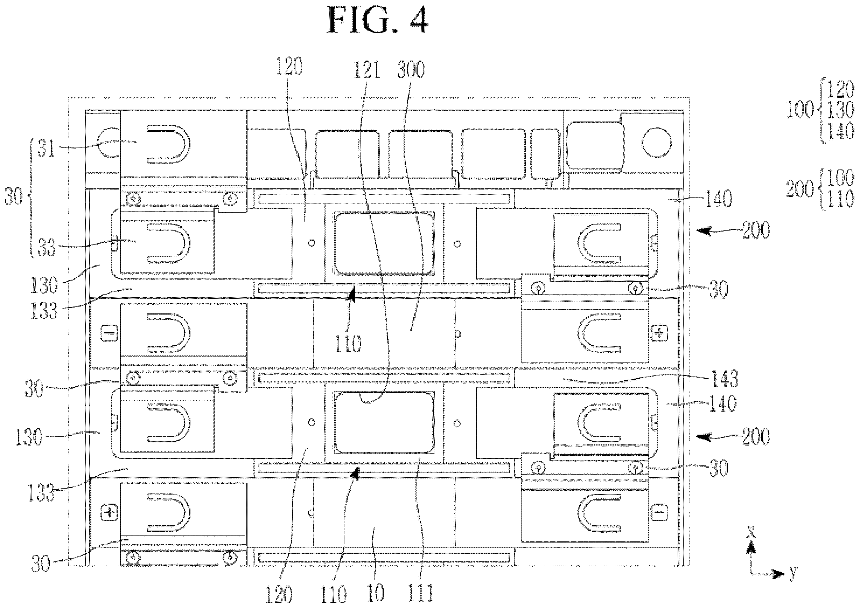

FIG. 1 is a perspective view schematically showing a battery pack according to an embodiment of the present disclosure. FIG. 2 is an exploded perspective view schematically showing a separated state of a frame portion to which the busbar of FIG. 1 is connected. FIG. 3 is an exploded perspective view schematically showing a separated state of the frame portion of FIG. 2 on top of battery cells. FIG. 4 is a top plan view schematically showing a fixed state of a busbar to a plurality of frame portions according to an embodiment of the present disclosure.

As shown FIG. 1 to in FIG. 4, a battery pack 400 according to an embodiment may include a plurality of battery cells 10 arranged along a first direction and each including a terminal portion 11 including a first terminal 11a and a second terminal 11b, a side frame 20 accommodating (e.g., surrounding) the plurality of battery cells 10, a plurality of frame portions 200 on a top of a portion of the plurality of battery cells 10 above the side frame 20 and each including an insertion portion 122 extending in a width direction, a pair of busbars 30 coupled to each of the plurality of frame portions 200 and electrically connecting the plurality of battery cells 10, and an insulation sheet 300 inserted into the insertion portion 122 of each of the plurality of frame portions 200 and extending in the first direction.

The side frame 20 may include a first side frame 21 configured to support first side surfaces of the plurality of battery cells 10, a second side frame 23 configured to support second side surfaces of the plurality of battery cells 10, a first end frame 25 having opposite ends connected to a first end of each of the first side frame 21 and the second side frame 23, and a second end frame 27 having opposite ends connected to a second end of each of the first side frame 21 and the second side frame 23.

The first side frame 21 may be configured to support a first side of the plurality of battery cells 10.

The second side frame 23 may be configured to support a second side of the plurality of battery cells 10.

The first end frame 25 may be configured to connect first ends of the first side frame 21 and the second side frame 23 to each other.

A first end of the first end frame 25 may be connected to a first end of the first side frame 21 by a fastening member, and a second end of the first end frame 25 may be connected to a first end of the second side frame 23 by a fastening member.

The second end frame 27 may be configured to connect second ends of the first side frame 21 and the second side frame 23 to each other.

A first end of the second end frame 27 may be connected to a second end of the first side frame 21 by a fastening member, and a second end of the second end frame 27 may be connected to a second end of the second side frame 23 by a fastening member.

The frame portions 200 and the busbars 30 may be on top of the side frame 20 (e.g., 21, 23, 25, and 27) such that the plurality of battery cells 10 are electrically connected to each other.

The frame portions 200 is on a portion of upper portions of the plurality of battery cells 10 and on an upper portion of the side frame 20. The frame portion 200 may be on upper portions of the battery cells 10 such that installation of the insulation sheet 300, described below, may be possible while fixing the busbars 30.

The plurality of frame portions 200 may extend or be arranged along the first direction (e.g., the X-axis direction) along the upper portion of the side frame 20, and the frame portions 200 may be configured such that upper portions of some of the plurality of battery cells 10 may be exposed.

Each of the frame portions 200 may be on an upper portion of an adjacent pair of the plurality of battery cells 10. A portion of adjacent frame portions 200 may be on a same battery cell 10.

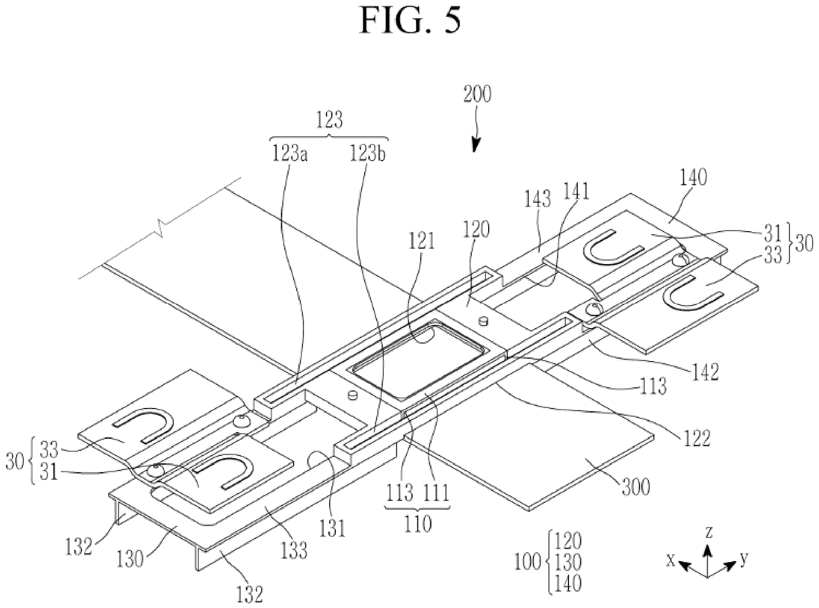

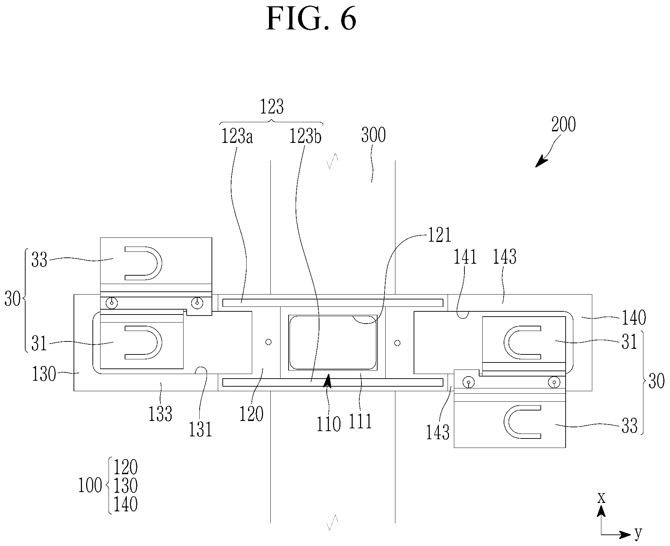

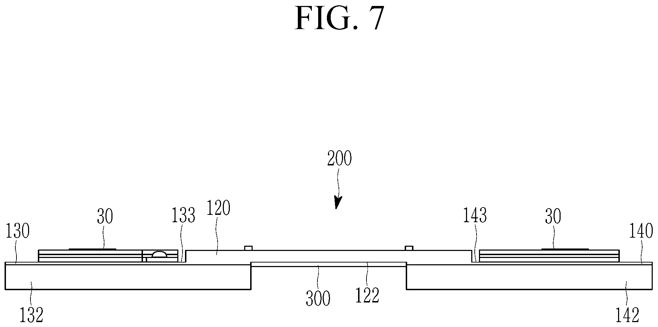

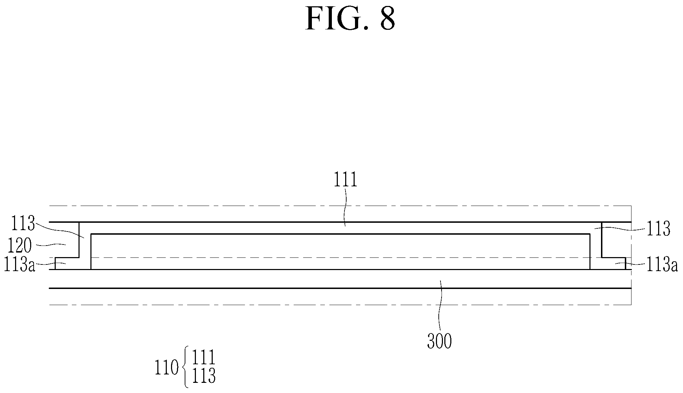

FIG. 5 is a perspective view schematically showing a frame portion 200 according to an embodiment. FIG. 6 is a top plan view schematically showing the frame portion 200 of FIG. 5. FIG. 7 is a side view schematically showing the frame portion 200 of FIG. 5. FIG. 8 is a side view schematically showing a state in which a reinforcing portion 110 is inserted into a frame portion 200 according to an embodiment of the present disclosure.

Referring to FIG. 5 to FIG. 8, in the upper portion of the battery cell 10, the frame portion 200 may be on an upper portion of the terminal portion 11 including the first terminal 11a and the second terminal 11b. The frame portion 200 may include an upper frame 100 in which the insertion portion 122 is located. The insulation sheet 300 is accommodated (inserted into) the upper frame 100 and the reinforcing portion 110 is accommodated in (inserted into) an interior of the upper frame 100 at a location of the insertion portion 122.

The plurality of upper frames 100 are arranged along the first direction on the upper portion of the battery cells 10 and on upper portions of the plurality of battery cells 10.

In an interior of the side frame 20, the upper frames 100 may be arranged on the upper portions of the battery cells 10 that are arranged in the first direction (X-axis), and the upper frames 100 may be on upper portions of the plurality of battery cells 10.

This configuration may streamline electrically connecting the busbars 30 to the plurality of battery cells 10 while being fixed to the frame portion 200, and enables stable connection of the busbars 30 and a reduction of the manufacturing cost.

The upper frame 100 has a length corresponding to a length of a cap plate forming the upper portion of each of the battery cells 10, and the upper frame 100 may be on the upper portion of the terminal portion 11 including the first terminal 11a and the second terminal 11b.

The upper frame 100 may extend lengthwise in a second direction (Y-axis) perpendicular to the first direction (X-axis). The components or portions of the upper frame 100 are arranged in the second direction (Y-axis) and connected to each. Therefore, expansion or variation of the installed length of the upper frame 100 in the second direction may be appropriately varied by changing the number of stacked components and the connected length of the components.

In one or more embodiments, the upper frame 100 may include a first frame 120 in which the insulation sheet 300 is located in a lower portion, a second frame 130 coupled to and being in surface contact with a portion of a lower surface of a first side of the first frame 120, and a third frame 140 coupled to and being in surface contact with a portion of a lower surface of a second side of the first frame 120.

The first frame 120 forms a central portion of the upper frame 100 in a length direction (Y-axis direction). The first frame 120 may be located at an upper portion of a vent portion 12 formed in the cap plate of the battery cell 10.

Locating the first frame 120 at the upper portion where the vent portion 12 is located allows the insulation sheet 300 to be located in the insertion portion 122 in the first frame 120, and the insulation sheet 300 is configured to prevent flames discharged through the vent portion 12 when an abnormality occurs in the battery cell 10 from spreading to the adjacent battery cells 10. This will be described in further detail below with respect to the insulation sheet 300.

A first through hole 121 may be in the first frame 120.

The first through hole 121 is located at a position corresponding to the position of the insertion portion 122 in the first frame 120, and the first through hole 121 may be configured such that the vent portion 12 is exposed when the upper frame 100 is on top of the battery cells 10.

The first through hole 121 may have a rectangular or square polygonal shape at the position corresponding to the position of the insertion portion 122 in the first frame 120. The first through hole 121 is not limited to a polygonal shape, but may have a round shape or any other suitable shape.

The insertion portion 122 may be located in a lower portion of the first frame 120.

The insertion portion 122 is in the lower portion of the first frame 120 and in an interval between the second frame 130 and the first frame 120. The insertion portion 122 is configured to accommodate the insulation sheet 300.

The reinforcing portion 110 may be in an interior of the first frame 120.

In one or more embodiments, the reinforcing portion 110 is in the interior of the first frame 120 at a position corresponding to the position of the insertion portion 122. The reinforcing portion 110 reinforces the strength of the first frame 120, such that the first frame 120 may not deform due to the pressure generated at the vent portion 12 in an abnormality. In addition, the insulation sheet 300 is supported in a lower portion of the reinforcing portion 110 such that even if abnormal pressure or a flame is discharged from the vent portion 12, the insulation sheet 300 may be stably positioned (e.g., fixed) in the insertion portion 122.

In one or more embodiments, the reinforcing portion 110 may include a reinforcing frame 111 in the interior of the first frame 120 at an edge (e.g., a perimeter) of the first through hole 121, and a support protrusion 113 protruding downward from an edge of the reinforcing frame 111 to support a surface of the insulation sheet 300.

The reinforcing frame 111 is in the interior of the first frame 120 along the periphery of the first through hole 121, and the reinforcing frame 111 may be formed as a square or rectangular reinforcing frame.

The reinforcing frame 111 may include a metallic material having sufficient durability to stably support of the upper frame 100.

The support protrusion 113 may protrude downward from the edge of the reinforcing frame 111.

The reinforcing frame 111 also includes a bent portion 113a (refer to FIG. 8) bent to a first side (e.g., outward) from a lower end portion of the support protrusion 113. A surface of the bent portion 113a is in surface contact with the insulation sheet 300, and the insulation sheet 300 may be stably support at the position of the insertion portion 122.

In one or more embodiments, the second frame 130 is connected to and in surface contact with a portion of lower surface of the first side of the first frame 120. The second frame 130 may extend from the first side of the first frame 120 toward a side surface of the battery cell 10.

The second frame 130 may be fixed with approximately 1/3 to approximately 1/4 of the total length in surface contact with a lower surface of the first frame 120.

In one or more embodiments, the first and second frames 120 and 130 may be fixed to each other by heat staking. Therefore, the first and second frames 120 and 130 may be fixed without using a separate fastening member, and thus a more stable fixed connection may be achieved.

A portion of the second frame 130 in the length direction is connected to the lower portion of the first frame 120. In an upper surface of the second frame 130, a first stepped portion 133 may be formed with respect to the first side of the first frame 120.

The first stepped portion 133 with respect to a side surface of the first frame 120 in an upper portion of the second frame 130 is configured to accommodate the busbar 30 (described later) and to minimize a height difference with respect to a surface of the first frame 120.

A second through hole 131 may be in the second frame 130.

The second through hole 131 is formed in an interior of the second frame 130, and may be formed such that the first terminal 11a of the battery cell 10 may be exposed.

The second through hole 131 may have a rectangular or square polygonal shape in the second frame 130. However, the second through hole 131 is not limited to a polygonal shape, and may a round shape or any other suitable shape.

A first insertion protrusion 132 may protrude from a lower portion of the second frame 130.

The first insertion protrusion 132 protrudes from edges of the lower portion of the second frame 130 facing each, and may protrude downward from the lower portion of the first frame 120 and have a length corresponding to a length of the second frame 130.

The first insertion protrusion 132 may protrude from the lower portion of the second frame 130, and may be inserted into a lower portion of an adjacent pair of the battery cells 10. The second frame 130 may be stably located in the upper portion of the battery cell 10 due to the first insertion protrusion 132.

As such, the first insertion protrusion 132 is inserted and fixed between the battery cells 10 without using a separate fastening member or welding, and accordingly, deformation or the like due to the conventional welding heat may be prevented, and thus the second frame 130 may be stably installed with improved durability.

The third frame 140 is connected to and in surface contact with a portion of lower surface of the second side of the first frame 120, and the third frame 140 may extend from the second side of the first frame 120 to the outside.

The third frame 140 may be fixed with approximately 1/3 to approximately 1/4 of the total length in surface contact with the lower surface of the first frame 120.

The first and third frames 120 and 140 may be fixed to each other by heat staking. Therefore, the first and third frames 120 and 140 may be fixed to each other without using a separate fastening member, and thus a more stable fixed connection may be achieved.

A portion of the third frame 140 in the length direction is connected to the lower portion of the first frame 120. In an upper surface of the third frame 140, a second stepped portion 143 may be formed with respect to the side surface of the first frame 120.

The second stepped portion 143 with respect to the side surface of the first frame 120 in an upper portion of the third frame 140 is configured to accommodate the busbar 30 (described later) while minimizing a height difference with respect to a surface of the first frame 120.

A third through hole 141 may be in the third frame 140.

The third through hole 141 is in the interior of the second frame 130 and may be formed such that the first terminal 11a of the battery cell 10 is exposed.

The third through hole 141 may have a rectangular or square polygonal shape in the third frame 140. However, the third through hole 141 is not limited to a polygonal shape and may be a round shape or any other suitable shape.

The second insertion protrusion 142 may protrude from a lower portion of the third frame 140.

The second insertion protrusion 142 protrudes downward from edges of the lower portion of the second frame 130 facing each other and may protrude from the lower portion of the first frame 120 and have a length corresponding to a length of the third frame 140.

The second insertion protrusion 142 may protrude from the lower portion of the third frame 140 and may be inserted into the lower portion of the adjacent pair of the battery cells 10. Therefore, the third frame 140 may be stably located in the upper portion of the battery cell 10 by the position fixing function of the second insertion protrusion 142.

The second insertion protrusion 142 is inserted and fixed between the battery cells 10 without using a separate fastening member or welding, and accordingly, deformation or the like due to the conventional welding heat may be prevented, and the third frame 140 may be stably installed with improved durability.

The first to third frames 120, 130, and 140 are arranged such that the second frame 130 and the third frame 140 are connected and stacked in the lower portion of the first frame 120 with the first frame 120 between the second and third frames 130 and 140. By changing lengths of the first to third frames 120, 130, and 140, the length of the upper frame 100 may be appropriately changed.

In the lower portion of the first frame 120, the second frame 130 and the third frame 140 are connected to each other while being spaced apart from each other, and the insulation sheet 300 may be inserted into and fixed to the insertion portion 122.

The insulation sheet (e.g., mica sheet) 300 is accommodated in the plurality of insertion portions 122 in the plurality of frame portions 200, and is formed in a plate shape that extends in the first direction.

The insulation sheet 300 may be located in an upper portion of the vent portion 12 when it is inserted into the plurality of insertion portions 122 of the plurality of frame portions 200. In one or more embodiments, the insulation sheet 300 may be formed of a mica material.

The insulation sheet 300 extends lengthwise in the first direction (X-axis), and may be inserted into each of a plurality of insertion portions 122.

The insulation sheet 300 may be inserted into the insertion portions 122 such that the insulation sheet 300 and the plurality of battery cells 10 extend along the first direction in the interior of the side frame 20.

The insulation sheet 300 is inserted into the insertion portions 122 and close (proximate) to a lower portion of the reinforcing frame 111 of each of the frame portions 200. In an event in which a flame or the like due to explosion of the battery cell 10 is discharged from the vent portion 12, the insulation sheet 300 is configured to prevent the spread of the thermal event to the adjacent battery cells 10.

In one or more embodiments, an inlet groove 123 is in the first frame 120.

The inlet groove 123 is in an upper surface of the first frame 120, and may include a first groove 123a and a second groove 123b at both sides (opposite sides) of the first through hole 121 (i.e., the first through hole 121 may be between the first groove 123a and the second groove 123b).

The first groove 123a is on a first side edge of the first frame 120 and has a first length. The first groove 123a may be at a location spaced apart by a predetermined distance from an edge of the first through hole 121.

The second groove 123b is at an opposite side of the first through hole 121 and facing a location where the first groove 123a is formed. The second groove 123b may be on a second side edge of the first frame 120 and have a second length.

The first groove 123a and the second groove 123b may be formed at both side edge positions of the first frame 120 and they may have the same or similar shape and length.

In an event in which explosion pressure generated from the vent portion 12 of the battery cell 10 is transferred to the outside, the first groove 123a and the second groove 123b may absorb the impact transferred to the first frame 120, thereby stably maintaining durability of the module.

The busbars 30 may be fixed to the edge of the second through hole 131 and the third through hole 141 of the upper frame 100, such that adjacent battery cells 10 may be electrically interconnected.

In one or more embodiments, a first side of the busbar 30 may fixed to an edge of the second through hole 131 and be electrically connected to the terminal portion 11.

In one or more embodiments, a second side of the busbar 30 may extend outside of the second through hole 131 (i.e., outside of the upper frame 100) and be electrically connected to the terminal portion 11 of the adjacent battery cell 10.

In addition, the first side of another busbar 30 may be fixed to an edge of the third through hole 141 and be electrically connected to the terminal portion 11.

In addition, the second side of the busbar 30 may extend to outside of the third through hole 141 (i.e., outside of the upper frame 100) and be electrically connected to the terminal portion 11 of the adjacent battery cell 10.

As described above, the busbars 30 may be connected to the edges of the second through hole 131 and the third through hole 141 and be electrically connected to the first terminal 11a and the second terminal 11b of the battery cells 10.

The busbars 30 may be fixed to the edges of the second through hole 131 and the third through hole 141 by heat staking.

Each of the busbars 30 may include a first portion 31 extending into the second through hole 131 or the third through hole 141 and a second portion 33 connected to a side surface of the first portion 31 and extending toward the exterior of the upper frame 100.

In one or more embodiments, an area of the first portion 31 may be smaller than an area of the second portion 33.

A stable electrical connection of the first portion 31 of the busbar 30 to the first terminal 11a or the second terminal 11b may be achieved within the second through hole 131 or the third through hole 141 that are narrower.

As described above, electrical connection of the busbars 30 to upper portions of a plurality of battery cells 10 may be achieved without using a conventional busbar holder for installation of the busbars 30. Therefore, a structural change, such as bending a portion of a side frame in order to connect the conventional holder, is not required, and improvement of the installed configuration and reduction of manufacturing cost may be enabled.

Since the busbars 30 may be fixed to the top of the battery cells 10 without using the conventional busbar holder, the installation height of the battery pack may be lowered, and installation of the battery pack may be improved.

In addition, since it is possible to fixed to the frame portion 200, to which the busbars 30 are fixed, to the top of the battery cells in an unwelded state, deformation due to welding heat may be prevented and durability of the installation may be improved.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**Description of symbols**

| | | | |
|---|---|---|---|
| 10: | battery cell | 11: | terminal portion |
| 11a: | first terminal | 11b: | second terminal |
| 12: | ventilation portion | 20: | side frame |
| 21: | the first side frame | 23: | second side frame |
| 25: | first end frame | 27: | second end frame |
| 30: | busbar | 31: | first portion |
| 33: | second portion | 100: | upper frame |
| 110: | reinforcing portion | 111: | reinforcing frame |
| 113: | support protrusion | 113a: | bent portion |
| 120: | first frame | 121: | first through hole |
| 122: | insertion portion | 123: | inlet groove |
| 123a: | first groove | 123b: | second groove |
| 130: | second frame | 131: | second through hole |
| 132: | first insertion protrusion | 140: | third frame |
| 141: | third through hole | 142: | second insertion protrusion |
| 200: | frame portion | 300: | insulation sheet |

## Claims

1. A battery pack (400), comprising:
a plurality of battery cells (10) arranged in a first direction, each of the plurality of battery cells (10) comprising a terminal portion (11) comprising a first terminal (11a) and a second terminal (11b);
a side frame (20) accommodating the plurality of battery cells (10);
a plurality of frame portions (200) on and coupled to an upper portion of the plurality of battery cells (10) and an upper portion of the side frame (20), each of the plurality of frame portions (200) comprising an insertion portion (122) extending in a width direction;
a plurality of busbars (30) coupled to the plurality of frame portions (200) and electrically connecting the plurality of battery cells (10) together; and
an insulation sheet (300) in the insertion portion (122) in each of the plurality of frame portions (200).

2. The battery pack (400) of claim 1, wherein each of the plurality of frame portions (200) comprises:
an upper frame (100) on an upper portion of one of the plurality of battery cells (10) and on an upper portion of the terminal portion (11) of one of the plurality of battery cells (10), wherein the insulation sheet (300) is accommodated in the upper frame (100); and
a reinforcing portion (110) in the upper frame (100).

3. The battery pack (400) of claim 2, wherein the upper frame (100) comprises:
a first frame (120);
a second frame (130) coupled to a lower surface on a first side of the first frame (120); and
a third frame (140) coupled to a lower surface on a second side of the first frame (120),
wherein the insertion portion (122) is below the first frame (120) and is defined by an interval by which the second frame (130) and the third frame (140) are spaced apart from each other.

4. The battery pack (400) of claim 3, further comprising a first through hole (121) in the first frame (120) exposing a vent portion (12) in one the plurality of battery cells (10).

5. The battery pack (400) of claim 3 or 4, wherein the reinforcing portion (110) comprises:
a reinforcing frame (111) in an interior of the first frame (120) around a peripheral edge of the first through hole (121); and
a support protrusion (113) protruding from an edge of the reinforcing frame (111) to support a surface of the insulation sheet (300), wherein optionally the insulation sheet (300) has a plate shape extending in the first direction and passing through the insertion portion (122) in each of the frame portions, wherein optionally the insulation sheet (300) comprises a mica material, wherein optionally the insulation sheet (300) is configured to cover the vent portion in each of the battery cells.

6. The battery pack (400) of claim 5, wherein an end portion of the support protrusion (113) is bent to a first side, and wherein a bent portion (113a) of the support protrusion (113) is in surface contact with a surface of the insulation sheet (300).

7. The battery pack (400) of claim 3, further comprising a first insertion protrusion (132) of the second frame (130) and a second insertion protrusion (142) of the third frame (140), wherein the first insertion protrusion (132) and the second insertion protrusion (142) are between the plurality of battery cells (10).

8. The battery pack (400) of claim 3, wherein the second frame (130) and the third frame (140) are fixed to the first frame (120) by heat staking.

9. The battery pack (400) of claim 4, further comprising a second through hole (131) in the second frame (130) and a third through hole (141) in the third frame (140), wherein the second through hole (131) and the third through hole (141) expose the terminal portion (11).

10. The battery pack (400) of any of claims 3 to 9, further comprising:
a first stepped portion (133) in an upper surface of the second frame (130); and
a second stepped portion (143) in an upper surface of the third frame (140).

11. The battery pack (400) of claim 10, wherein one of the plurality of busbars (30) is coupled to the first stepped portion (133) on the upper surface of the second frame (130) and electrically connected to the terminal portion (11).

12. The battery pack (400) of any of claims 9 to 11, wherein the one of the plurality of busbars (30) is coupled to an edge of the second through hole (131) and is electrically connected to the terminal portion (11) of an adjacent one of the plurality of battery cells (10).

13. The battery pack (400) of claim 10 or 11, wherein another one of the plurality of busbars (30) is coupled to the second stepped portion (143) in the upper surface of the third frame (140).

14. The battery pack (400) of claim 13, wherein the another one of the plurality of busbars (30) is coupled to an edge of the third through hole (141) and is electrically connected to the terminal portion (11) of another adjacent one of the plurality of battery cells (10), wherein the battery pack (400) optionally includes an inlet groove (123) on a surface of the upper frame between the second through hole (131) and the third through hole (141), wherein the inlet groove (123) optionally includes a first groove (123a) extending along a first side edge of the first frame (120) and a second groove (123b) extending along a second side edge of the first frame (120), and the first through hole (121) may be between the first groove (123a) and the second groove (123b).

15. The battery pack (400) of claim 13 or 14, wherein the one of the plurality of busbars (30) is coupled to the first stepped portion (133) by heat staking and the another one of the plurality of busbars (30) is coupled to the second stepped portion (143) by heat staking.
